# EUROPEAN PATENT SPECIFICATION

(11) **EP 2 862 799 B1**
(45) Date of publication and mention of the grant of the patent: **30.01.2019**
(21) Application number: 14188983.2
(22) Date of filing: 15.10.2014
(51) Int. Cl.: B64C 11/26, B64C 11/06, F01D 5/30

(54) **Retention assembly for a propeller blade**
Halteanordnung für ein Propellerblatt
Ensemble de retenue destiné à une pale d'hélice

(30) Priority: 17.10.2013 US 201314056322
(43) Date of publication of application: 22.04.2015
(73) Proprietor: Hamilton Sundstrand Corporation, Charlotte, NC 28217 (US)
(72) Inventor: Nagle, David P., Westfield, MA Massachusetts 01085 (US); Carvalho, Paul A., Hadley, MA Massachusetts 01035 (US)
(74) Representative: Dehns

(56) References cited:
- GB-A- 1 567 968
- US-A- 3 734 642
- US-A1- 2009 220 344
- US-B2- 6 676 080

## Description

### BACKGROUND

The subject matter disclosed herein relates generally to propeller systems and blades and, more particularly, to a lightweight propeller blade assembly with an improved retention capacity for lower centrifugal loads.

### DESCRIPTION OF RELATED ART

Modern propeller blades typically incorporate composite materials that reduce weight and enhance performance. The composite blades typically include a blade portion and a root portion which extends into a hub arm of the hub of a propeller system and which is secured to and rotatable relative to the hub arm via a retention assembly. A challenge with lightweight composite blades is that a bending moment (BM) capacity of the retention assembly to the hub arm is often reduced due to a lower centrifugal load (CL) of the blade. A typical lightweight propeller blade using a type of arrangement to address BM includes the system shown in U.S. Pat. No. 6,676,080. As can be seen from the drawings of this patent, the bearing races are sized for bearings that can withstand bending moments, but the interface between the composite blade and outer ring bearing race may become unloaded due to insufficient centrifugal loading. This is an undesirable condition which may reduce the life of the composite blade portion and/or outer ring.

Thus, there is a need for a lightweight propeller blade with an improved retention capacity that can withstand high bending moments at lower centrifugal loading.

A prior art propeller blade assembly, having the features of the preamble of claim 1, is disclosed in US 6,676,080. Another prior art propeller blade assembly is disclosed in GB 1567968.

### BRIEF SUMMARY

According to the present invention, there is provided a propeller blade assembly as claimed in claim 1.

Other aspects, features, and techniques of the invention will become more apparent from the following description taken in conjunction with the drawings.

### BRIEF DESCRIPTION OF THE SEVERAL VIEWS OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which like elements are numbered alike in the FIGURES:
FIG. 1 is a plan view of an aircraft according to an embodiment of the invention; and
FIG. 2 is a cross-sectional view of a propeller blade assembly of FIG. 1 according to an embodiment of the invention.

### DETAILED DESCRIPTION OF THE INVENTION

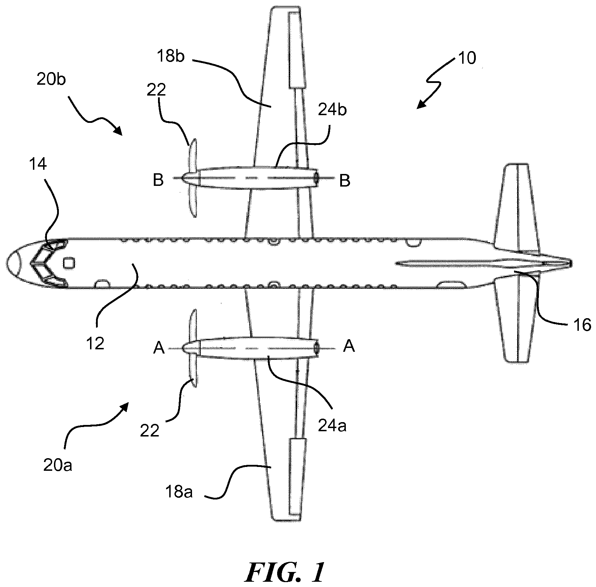

Referring to the drawings, FIG. 1 is a plan view of an aircraft 10 having a plurality of lightweight propeller blade assemblies 22 with an improved retention capacity according to an embodiment of the invention. The aircraft 10 includes a fuselage 12, a cockpit 14, and a tail 16. Attached to the fuselage 12 are left and right wings 18a, 18b respectively. Each wing 18a, 18b incorporates a respective propeller 20a, 20b that is aligned on respective axes A, B. Each propeller 20a, 20b includes a plurality of propeller blade assemblies 22 that are driven for rotation by respective gas turbine engines 24a, 24b. Although a specific aircraft 10 is illustrated and described herein, other propeller driven aircrafts are within the scope of the invention.

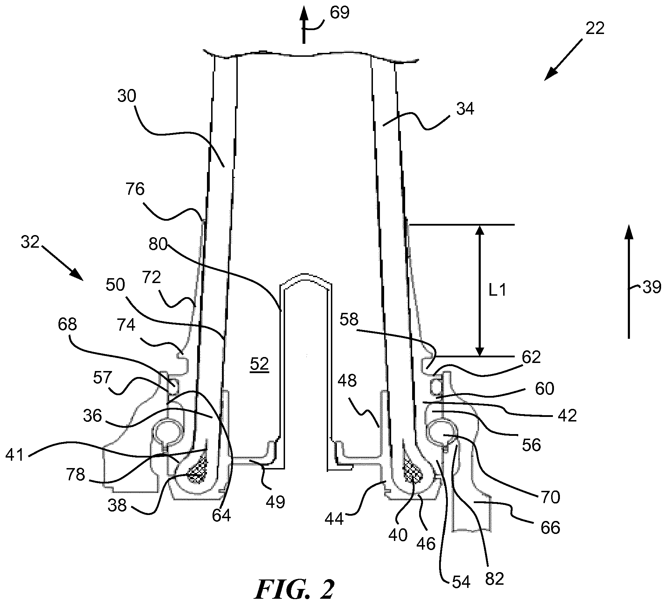

Referring to FIG. 2, a cross-section view of a lightweight propeller blade assembly 22 that has an improved retention capacity is illustrated according to an embodiment of the invention. The propeller blade assembly 22 includes a propeller blade 30 that is received and secured to a retention assembly 32. The propeller blade 30 includes a blade portion 34 that terminates into a root portion 36. The propeller blade 30 is generally cylindrical in shape at root portion 36 and transitions to an airfoil shape that thins and flattens toward a tip (not shown) which is directionally opposite root portion 36 in a direction of arrow 39 (i.e., from inboard/hub end to an outboard/tip end of the propeller blade 30). In embodiments, the shape of propeller blade 30 may also spiral or twist toward the tip (not shown) in a known manner according to the type of propeller blade that is used. In embodiments, propeller blade 30 including blade portion 34 and root portion 36 may be constructed of one or more layers of unidirectional and/or woven glass fibers, and one or more layers of unidirectional and/or woven graphite fibers that are embedded in a suitable resin material as is well-known to a person of ordinary skill in the art. The root portion 36 is configured to attach to a retention assembly 32. It is to be appreciated that the retention assembly 32 is configured to attach to the propeller blade 30 and provide an improved retention capacity for high blade moments and lower centrifugal loads, as will be described in greater detail below.

The root portion 36 includes an annular loop 38 that forms a teardrop-shaped bore 41. Retention assembly 32 includes an inner ring 40, an extended outer ring 42, and a generally cup-shaped base 44. In embodiments, rings 40, 42 may be machined from high strength stainless steel, although aluminum, titanium or other suitable metals or composites may be used. The base 44 may be machined from aluminum material, but may alternatively be constructed of other materials, such as steel, composites, or the like. Also, inner ring 40 is conformally shaped to the bore 41 (i.e., inner ring 40 may include a tear-drop shaped cross-section) and is located inside the bore 41. The base 44 is positioned immediately adjacent annular loop 38 and includes a lower end 46, a wall 48, and a lateral portion 49. The wall 48 extends upwardly from lower end 46 into a hollow root cavity 52 and is in frictional engagement with an inner surface 50 of root portion 36. Also, lateral portion 49 resides inside the hollow root cavity 52. The annular loop 38 and inner ring 40 are sandwiched between base 44 and extended outer ring 42. A balance tube 80 extends through a central opening defined by lateral portion 49 in base 44. The balance tube 80 and lateral portion 49 close hollow root cavity of root portion 36 to prevent intrusion of oil and/or moisture into the hollow root cavity 52 which may otherwise damage propeller blade 30.

The extended outer ring 42 is generally annular in shape and includes, moving inboard to outboard, a bearing race interface 54, a bearing race groove 56, a lower annular groove 57, a plurality of flanges 60, 62 that are located between bearing race groove 56, and an upper annular groove 58. The bearing race interface 54 has a radially internal surface that is complementary to radially outer curved surface 78 of annular loop 38. The bearing race groove 56 is a bearing race that receives a bearing assembly 70 such as, for example, an angular contact ball bearing assembly, tapered roller bearing assembly, deep groove thrust or roller bearing assembly, two-piece bearing race assemblies, or the like. Although a single bearing race groove 56 is shown and described, in an embodiment, two or more bearing race grooves substantially similar may also be provided for use with a propeller hub 66 that can use multiple row bearing assemblies.

The flanges 60, 62 cooperatively define a lower annular groove 57 that is adapted to receive an O-ring 68 while an upper annular groove 58 is adapted to receive a locking ring (not shown) for holding propeller blade assembly 22 against movement into the propeller hub 66 when not in use. The flanges 60, 62 bear against a retaining surface 64 of a propeller hub 66 to contain the O-ring 68. The bearing race groove 56 cooperates with the hub race groove 82 to contain the bearing assembly 70 and prevent separation of propeller blade assembly 22 from propeller hub 66 when high outward centrifugal force applied in a direction of arrow 69 during rotation of propeller hub 66. Also, upper annular groove 58 terminates into a tapered portion 72. The tapered portion 72 has a length L1 that gets progressively thinner radially from inboard end 74 to an outboard end 76. Tapered portion 72 has an internal taper along an internal surface of portion 72 (to be conformal to the outer surface of blade portion 34) and an external taper along an outer surface of portion 72, as illustrated in the figure. In embodiments, thickness of tapered portion 72 from inboard end 74 to outboard end 76 is reduced between about 0.05 inch (0.127 centimeter) to about 0.10 inch (0.254 centimeter) for every inch (2.54 centimeter) of length of tapered portion 72. In an embodiment, thickness at outboard end 76 is between about 0.005 inch (0.013 centimeter) to about 0.035 inch (0.089 centimeter). In an embodiment, length L1 is about 0.5 inch (1.270 centimeter) to about 2 inch (5.080 centimeter). Also, an adhesive is utilized along complementary mutual interfaces of extended outer ring 42 and root portion 36 in order to adhesively connect the mutual interfaces (or complementary surfaces). As illustrated in FIG. 2, mutual interfaces include, on propeller blade 30, an outer curved surface 78 of annular loop 38 moving upwards to blade portion 34 which contacts, on retention assembly 32, a radially internal surface of bearing race interface 54 to outboard end 76 of outer ring 42. In embodiments, the adhesive could be a structural adhesive such as an epoxy and/or a compliant adhesive such as polyurethane, polysulfide or RTV silicone. In one example, Hysol® EA 9346.5 epoxy paste adhesive manufactured by the Henkel Corporation may be used as the structural adhesive.

In prior art propeller blades, the retention capacity of an interface between the composite blade and outer ring bearing race may become unloaded due to insufficient centrifugal loading which may reduce the life of the blade portion and/or the outer ring of the propeller blade. However, benefits of the present invention with a use of the outer ring 42 and an adhesive to coupled mutual interfaces is an improved retention capacity for use with lightweight composite propeller blades. The retention capacity is facilitated with a retention assembly 32 having an added length of outer ring 42 and an adhesive that couples mutual interfaces of the propeller blade 30. Using the additional length for outer ring 42 and the adhesive increases a bending moment capacity over prior art propeller blades because it prevents the lightweight propeller blade 30 from separating at a bearing race interface 54 of outer ring 42. Additional benefits of using an adhesive is that an adhesive layer between the contact surface of outer ring 42 and a root portion 36 of propeller blade 30 provides a shear path to direct the bending loads to the bearings 70 thereby preventing unloading of the propeller blade 30 at the bearing race interface 54.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. For instance, aspects of the invention are not limited to propeller blades for aircraft, and can be used in wind turbines and other systems with rotary elements. Many modifications, variations, alterations, substitutions, or equivalent arrangement not hereto described will be apparent to those of ordinary skill in the art without departing from the scope of the invention. Additionally, while the various embodiment of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade assembly (22) comprising:
a propeller blade (30) including a blade portion (34) and a root portion (36); and
a retention assembly (32), configured to be attached to the propeller blade (30), the retention assembly (32) comprising:
an inner ring (40) that is conformally shaped to a bore (41) of an annular loop (38), the annular loop (38) being associated with the root portion (36) of the propeller blade (30);
a base (44) that is configured to be immediately adjacent the annular loop (38); and
an outer ring (42) that includes an extended tapered portion (72) which decreases in radial thickness from an inboard end (74) to an outboard end (76), wherein the outer ring (42) further comprises a bearing race interface (54), a bearing race groove (56), a lower annular groove (57), and is **characterised by** an upper annular groove (58) that terminates into the extended tapered portion (72), the extended tapered portion (72) including a first taper on an inner surface and a second taper on an external surface and by the retention assembly (32) further comprising an adhesive that adhesively connects complementary surfaces of the outer ring (42) and the annular loop (38).

2. The propeller blade assembly (22) of claim 1, wherein the extended tapered portion (72) decreases in radial thickness of between 0.05 inch (0.127 cm) to 0.10 inch (0.254 cm) for every one inch (2.54 cm) of length from the inboard end (74) to the outboard end (76).

3. The propeller blade assembly (22) of claim 1 or 2, wherein a thickness of the outboard end (76) is 0.005 inch (0.013 cm) to 0.035 inch (0.089 cm).

4. The propeller blade assembly (22) of any of claims 1 to 3, wherein a radial outer surface (78) of the annular loop (38) is adhesively connected to a radial inner surface of the bearing race interface (54).

5. The propeller blade assembly (22) of any preceding claim, further comprising a bearing assembly (70) coupled to the bearing race groove (56).

6. The propeller blade assembly (22) of any preceding claim, wherein a length of the extended tapered portion (72) is 0.5 inch (1.27 cm) to 2 inch (5.080 cm).

7. The propeller blade assembly (22) of any preceding claim, wherein the outer ring (42) further comprises a plurality of flanges (60, 62) located between the bearing race groove (56) and the upper annular groove (58), and defining the lower annular groove (57).

## Patentansprüche

1. Propellerblattanordnung (22), Folgendes umfassend:
ein Propellerblatt (30), das einen Blattabschnitt (34) und einen Fußabschnitt (36) beinhaltet; und
eine Halteanordnung (32), die dazu konfiguriert ist, an das Propellerblatt (30) angebracht zu werden, wobei die Halteordnung (32) Folgendes umfasst:
einen Innenring (40), der konform zu einer Bohrung (41) einer ringförmigen Schlaufe (38) gebildet ist, wobei die ringförmige Schlaufe (38) dem Fußabschnitt (36) des Propellerblatts (30) zugeordnet ist;
einen Sockel (44), der dazu konfiguriert ist, direkt an die ringförmige Schlaufe (38) anzugrenzen; und
einen Außenring (42), der einen verlängerten verjüngten Abschnitt (72) beinhaltet, der in radialer Dicke von einem inneren Ende (74) zu einem äußeren Ende (76) abnimmt, wobei der Außenring (42) ferner eine Laufringoberfläche (54), eine Laufringnut (56), und eine untere Ringnut (57) umfasst und durch eine obere Ringnut (58), die in dem verlängerten verjüngten Abschnitt (72) endet, gekennzeichnet ist, wobei der verlängerte verjüngte Abschnitt (72) eine erste Verjüngung an einer Innenfläche und eine zweite Verjüngung an einer Außenfläche beinhaltet und die Halteanordnung (32) ferner eine Klebemittel umfasst, welches klebend Komplementärflächen des Außenrings (42) und der ringförmigen Schlaufe (38) verbindet.

2. Propellerblattanordnung (22) nach Anspruch 1, wobei der verlängerte verjüngte Abschnitt (72) in radialer Dicke von etwa 0,05 Inch (0,127 cm) bis 0,10 Inch (0,254 cm) bei jedem Inch (2,54 cm) der Länge von dem Innenende (74) zu dem Außenende (76) abnimmt.

3. Propellerblattanordnung (22) nach Anspruch 1 oder 2, wobei eine Dicke des Außenendes (76) 0,005 Inch (0,013 cm) bis 0,035 Inch (0,089 cm) ist.

4. Propellerblattanordnung (22) nach einem der Ansprüche 1 bis 3, wobei eine radiale Außenfläche (78) der Ringschlaufe (38) klebend mit einer radialen Innenfläche der Laufringoberfläche (54) verbunden ist.

5. Propellerblattanordnung (22) nach einem der vorstehenden Ansprüche, ferner eine Lageranordnung (70) umfassend, die mit der Laufringnut (56) gekoppelt ist.

6. Propellerblattanordnung (22) nach einem der vorstehenden Ansprüche, wobei eine Länge des verlängerten verjüngten Abschnitts (72) 0,5 Inch (1,27 cm) bis 2 Inch (5,080 cm) ist.

7. Propellerblattanordnung (22) nach einem der vorstehenden Ansprüche, wobei der Außenring (42) ferner eine Vielzahl von Flanschen (60, 62) umfasst, die zwischen der Laufringnut (56) und der oberen Ringnut (58) angeordnet sind und die untere Ringnut (57) definieren.

## Revendications

1. Ensemble pale d'hélice (22) comprenant :
une pale d'hélice (30) incluant une partie pale (34) et une partie emplanture (36) ; et
un ensemble de retenue (32), configuré pour être attaché à la pale d'hélice (30), l'ensemble de retenue (32) comprenant :
une bague intérieure (40) qui est façonnée de manière conforme à un trou (41) d'une boucle annulaire (38), la boucle annulaire (38) étant associée à la partie emplanture (36) de la pale d'hélice (30) ;
une base (44) qui est configurée pour être immédiatement adjacente à la boucle annulaire (38) ; et
un anneau extérieur (42) qui inclut une partie resserrée étendue (72) dont l'épaisseur radiale diminue depuis une extrémité intérieure (74) vers une extrémité extérieure (76), dans lequel l'anneau extérieur (42) comprend en outre une interface de chemin de roulement (54), une rainure de chemin de roulement (56), une rainure annulaire inférieure (57), et est **caractérisé par** une rainure annulaire supérieure (58) qui se termine dans la partie resserrée étendue (72), la partie resserrée étendue (72) incluant un premier resserrement sur une surface intérieure et un second resserrement sur une surface externe et par l'ensemble de retenue (32) comprenant en outre un adhésif qui relie de manière adhésive des surfaces complémentaires de l'anneau extérieur (42) et de la boucle annulaire (38).

2. Ensemble pale d'hélice (22) selon la revendication 1, dans lequel l'épaisseur radiale de la partie resserrée étendue (72) diminue entre 0,05 pouce (0,127 cm) et 0,10 pouce (0,254 cm) tous les un pouce (2,54 cm) de longueur de l'extrémité intérieure (74) à l'extrémité extérieure (76).

3. Ensemble pale d'hélice (22) selon la revendication 1 ou 2, dans lequel une épaisseur de l'extrémité extérieure (76) fait de 0,005 pouce (0,013 cm) à 0,035 pouce (0,089 cm).

4. Ensemble pale d'hélice (22) selon l'une quelconque des revendications 1 à 3, dans lequel une surface extérieure radiale (78) de la boucle annulaire (38) est reliée de manière adhésive à une surface intérieure radiale de l'interface de chemin de roulement (54).

5. Ensemble pale d'hélice (22) selon une quelconque revendication précédente, comprenant en outre un ensemble roulement (70) accouplé à la rainure de chemin de roulement (56).

6. Ensemble pale d'hélice (22) selon une quelconque revendication précédente, dans lequel une longueur de la partie resserrée étendue (72) fait de 0,5 pouce (1,27 cm) à 2 pouces (5,080 cm).

7. Ensemble pale d'hélice (22) selon une quelconque revendication précédente, dans lequel l'anneau extérieur (42) comprend en outre une pluralité de brides (60, 62) situées entre la rainure de chemin de roulement (56) et la rainure annulaire supérieure (58), et définissant la rainure annulaire inférieure (57).
